# EUROPEAN PATENT APPLICATION

(11) **EP 4 838 384 A1**
(43) Date of publication of application: **11.11.2026**
(21) Application number: 26177056.4
(22) Date of filing: 06.05.2026
(51) Int. Cl.: G06F 16/9032

(54) **PERSONALIZED MULTI AI AGENT PLATFORM FOR ADS CAMPAIGN MANAGEMENT**

(30) Priority: 09.05.2025 US 202563803443 P; 28.04.2026 US 202619661409
(71) Applicant: Google LLC, Mountain View, CA 94043 (US)
(72) Inventor: MISHRA, Ashutosh Kumar, California 94043 (US); AZAM, Nayyar, California 94043 (US); ZHANG, Qiang, California 94043 (US); MCKEE, William, California 94043 (US); WANG, Zhinan, California 94043 (US); WANG, Aobo, California 94043 (US); CRESPO, Jesus, California 94043 (US); CRESPO, Sravani, California 94043 (US); BHARGAVA, Rajan, California 94043 (US); ALIB, Muzzafar, California 94043 (US); YANG, Wan-Huang, California 94043 (US); KAMYK, Roman, California 94043 (US); MORNINGSTAR, Spencer, California 94043 (US); XU, Yi, California 94043 (US); WANG, Siqing, California 94043 (US); POWELL, Jamie Nicole, California 94043 (US); ZHOU, Xiaolan, California 94043 (US); YAO, Kai, California 94043 (US); YU, Zhou, California 94043 (US); NAIMAGON, Ilia, California 94043 (US); CHEN, Wei, California 94043 (US); LAN, Xiaoye, California 94043 (US)
(74) Representative: Marks & Clerk GST

(57) **Abstract**

A method for accurate and low-latency user request handling includes receiving a user request, and generating, by an orchestrator, a context-specific response to the user request. Generating the context-specific response includes generating, based on the user request and one or more contextual signals, a response development plan specifying one or more specialized AI agents. Generating the response development plan includes determining that the specified AI agent(s) is/are relevant to the user request. Each specialized AI agent is configured to analyze queries specific to a respective domain. Generating the context-specific response also includes querying the specified AI agent(s) in accordance with the response development plan, and in response receiving respective feedback from the AI agent(s). The context-specific response is generated based on the respective feedback.

## Description

### CROSS-REFERENCE TO RELATED APPLICATIONS

This application claims the benefit of U.S. Provisional Patent Application No. 63/803,443, entitled "Centralized Multi-Agent Platform for Accurate and Low-Latency Handing of User Requests" and filed on May 9, 2025, the entire disclosure of which is hereby incorporated herein by reference.

### FIELD OF TECHNOLOGY

The present disclosure relates to query handling techniques and, more particularly, to techniques that use a centralized architecture of artificial intelligence agents to provide accurate user request responses with low latency.

### BACKGROUND

The background description provided herein is for the purpose of generally presenting the context of the disclosure. Work of the presently named inventor(s), to the extent it is described in this background section, as well as aspects of the description that may not otherwise qualify as prior art at the time of filing, are neither expressly nor impliedly admitted as prior art against the present disclosure.

In a number of fields or use cases, users of computer/software-based platforms can have needs (questions, concerns, interests, etc.) that can be widely varying in focus, scope, and level of generality. In the field of digital advertising, for example, users/entities with digital advertising accounts might want to learn how their ad performance has been trending, how to improve performance of their ad campaigns (or a specific aspect of a specific ad campaign), why a particular ad was disapproved by the platform provider, and so on. However, users may need to take varied and burdensome steps to address those needs. For example, an advertising entity may query an analytics tool and/or set various parameters to view past ad performance, communicate with a consultant/expert regarding techniques for optimizing ad campaign performance, communicate with the platform provider to ask why a particular ad was disapproved, and so on.

Automated query systems (e.g., user "help" tools) can provide a relatively fast, efficient, and low-cost way to address some of the user issues that arise for certain applications, tools, or platforms. However, and especially for complex platforms that involve the operation of numerous components, features, etc., such systems typically lack the flexibility/capabilities to provide support for wide-ranging issues. While recent improvements to large language models (LLMs) have made automated query systems more flexible, they are still generally limited in their breadth of applicability by factors such as susceptibility to hallucinations, context window size limitations, and a general inability to train reasonably sized models to competently handle numerous different areas/aspects. While very large models and/or highly complex systems can address some of these problems, this typically comes at the cost of greater processing resource usage, and increased latency/delay in providing responses to user queries. Particularly with chat-style platforms, even a moderate amount of "per turn" latency can be unacceptable.

### SUMMARY

Techniques of the present disclosure can remedy the above-noted deficiencies and other technological problems by providing a systematic, efficient, and automated query handling framework that uses an orchestrator to coordinate the actions of multiple specialized AI agents (e.g., reporting agent, diagnostic agent, optimization agent, billing agent, policy agent, etc.). The orchestrator provides planning and response capabilities by using separate planner and response models, or by using a single model, depending on the implementation. In response to receiving a user request (e.g., query or instruction), the orchestrator generates a response development plan at least in part by determining which of the specialized AI agents are relevant to the user request, and generates synthetic queries for (e.g. formulates prompts for) the relevant AI agents in accordance with the response development plan. As used herein, and unless clearly otherwise indicated by the context of use, the term "request" or "query" can refer to a single request or query transmission/message, or to a set of request or query transmissions/messages (e.g., over the course of a multi-turn "conversation"), for example. Based on feedback received in response to the synthetic queries, the orchestrator generates a response for presentation to the user. Separating responsibilities between the planner and response stages or components in this manner can enable faster updates or optimizations, and can help to ensure that the updates or optimizations have more predictable results.

Moreover, by using specialized or skill-specific AI agents rather than relying on a single, general agent or model, the disclosed techniques can provide more detailed expertise and/or contextual specificity in particular areas, e.g., without the need for a single large model that would be more processing-intensive, slow, and/or difficult to train, or simply impractical due to context window and/or other limitations. Furthermore, by routing queries to specialized AI agents, the disclosed techniques avoid reliance on a single larger model that may be subject to hallucinations, and thus reduce the risk of incorrect, irrelevant, or imaginary information. Because each specialized AI agent is trained/configured specifically in its respective domain, inaccuracies and misinformation that commonly arise from general-purpose models can be mitigated.

Thus, the disclosed techniques strike a balance by providing the ability to accurately and flexibly handle a wide range of complex user requests, without the need for computationally expensive, slow, and/or overly complex general-purpose models. Moreover, the ability to add or remove particular specialized AI agents as needed makes the disclosed architecture highly flexible and scalable, and the centralized architecture of the orchestrator and specialized AI agents allows for more efficient resolution of conflicts, enforcement of desired policies, and so on. Furthermore, the disclosed techniques can reduce latency and processing resource usage by resolving inconsistencies, conflicts, lack of conversational fluidity, etc., in a more efficient, centralized manner.

The disclosed techniques further help to ensure that the ultimate response has greater relevance to the user who entered the request, and/or to another entity associated with the request such as an advertiser on behalf of which the request was entered, by leveraging contextual signals to generate the response development plan and/or the synthetic queries for the specialized AI agents. For example, the orchestrator may formulate the response development plan based in part on information about an advertiser associated with the user request, or information relating to an account or business of the advertiser, etc. In some implementations, the disclosed techniques provide still greater contextual relevancy by using one or more signals related to the user interface via which the user request was entered. For example, the orchestrator may formulate the response development plan in part by analyzing information about the current state of the user interface (e.g., which page or page portion a user is currently viewing as captured in a screenshot) to more accurately determine which specialized AI agents are relevant to the user's request.

In some implementations, further technical advantages are obtained by adapting the operation of the specialized AI agents, the responsive feedback the specialized AI agents provide to the orchestrator, and/or the manner in which the orchestrator uses the responsive feedback from the specialized AI agents. For example, when a specialized AI agent receives a query from the orchestrator (in accordance with the response development plan), the specialized AI agent may respond by sending the orchestrator intermediate reasoning that the specialized AI agent develops to support a response to the query (e.g., to support a response that would normally be generated by a response layer model of the specialized AI agent), as well as the grounding data that the specialized AI agent uses to generate the intermediate reasoning, without necessarily generating and/or sending the higher-layer query response itself (or, in some implementations, with the orchestrator receiving but ignoring the higher-layer query response). In this manner, the response formulation task of the specialized agent is effectively delegated to the orchestrator, with the orchestrator using the intermediate reasoning and grounding data (and possibly other information from the specialized AI agent, such as instructions regarding how to read the grounding data) to generate the response to the user request. By receiving the underlying reasoning and grounding data, the orchestrator gains information sufficient to (at least in some cases) prevent any need to re-query the specialized AI agent. By removing a loop/round (or multiple loops/rounds) in the orchestrator/agent communication, such an implementation can reduce the total latency in the response provided to the user, while also reducing usage of processing power. Moreover, and counter-intuitively (given the greater domain expertise of the specialized AI agents), removing the layer in which the specialized AI agent formulates its response to the orchestrator query can reduce hallucinations, as conclusions or deductions made by response models of specialized AI agents can be a significant source of hallucinations.

In some implementations, further technical advantages are obtained by storing/maintaining contexts for at least some of the specialized AI agents. For example, for purposes of generating the response development plan, the orchestrator may maintain a first agent context/history that is indicative of previous communications (e.g., queries/feedback) between the orchestrator and a first specialized AI agent, and separately maintain a second agent context/history that is indicative of previous communications between the orchestrator and a second specialized AI agent. Central maintenance of isolated, agent-specific contexts/histories effectively provides a much broader context window (or equivalently, does not require that specialized AI agents themselves maintain larger contexts) while also reducing the likelihood of hallucination by allowing each specialized AI agent to focus more exclusively on its own domain without cross-context pollution (e.g., without specialized AI agents having to analyze/consider unwanted data/history in the synthetic queries).

Experiments have shown that a system in which an orchestrator generates responses to user queries based on grounding data and intermediate reasoning (rather than higher-layer responses) from specialized AI agents, and in which the orchestrator maintains separate/isolated contexts for different specialized AI agents, can result in factuality (lack of fact-based hallucinations) improving from about 87% to about 97%, and latency in the response to the user improving from about 8 seconds to about 3 seconds. Such improvements are possible because, for example, the system avoids the hallucinations that are prone to occur at the response layer of the specialized AI agents, and fewer turns/rounds of communication between the orchestrator and the specialized AI agents are generally needed.

In some implementations and/or scenarios, the orchestrator responds to the initial user request, at least in part, by performing or triggering an action. For example, the orchestrator may identify one or more operations that should take place via the user interface, after which the orchestrator (or another component or device/system) may remotely assume control of an input function of the client device to effectuate the identified operation(s) (e.g., while the client device user observes the corresponding movements of a mouse pointer that interacts with the user interface).

Other advantages will also become apparent to one of ordinary skill in the art upon reading this disclosure and viewing the corresponding drawings.

### BRIEF DESCRIPTION OF THE DRAWINGS

FIG. 1 is a block diagram of an example system in which user request handling techniques of the present disclosure can be implemented.
FIG. 2 depicts an example architecture that may be implemented by the computing system of FIG. 1.
FIG. 3 depicts an example set of specialized artificial intelligence (AI) agents and tools that may be used by the computing system of FIG. 1 within the architecture of FIG. 2.
FIG. 4 is a messaging diagram representing a sequence of messages that may be exchanged within the computing system of FIG. 1 and/or the architecture of FIG. 2, in one example scenario and implementation.
FIG. 5 is a messaging diagram representing another sequence of messages that may be exchanged within the computing system of FIG. 1 and/or the architecture of FIG. 2, in an alternative implementation.
FIG. 6 depicts an example process that may be implemented by one or more specialized AI agents.
FIGs. 7A-7D depict user interfaces (UIs) that the UI component of FIG. 1 may cause to be presented to a user, in various example scenarios and implementations.
FIG. 8 is a flow diagram of an example method for accurate and low-latency user request handling.

### DETAILED DESCRIPTION OF THE DRAWINGS

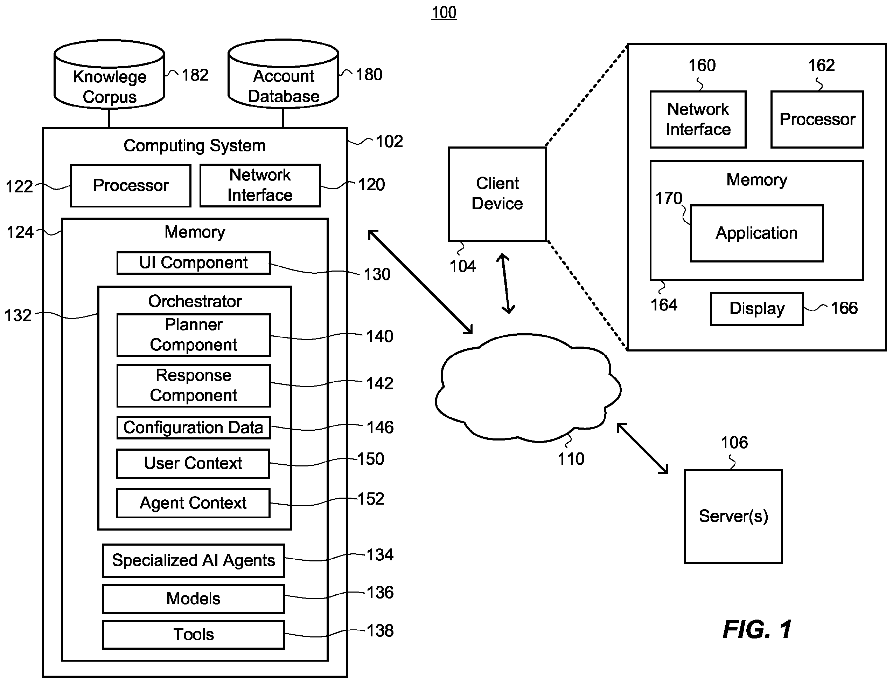

FIG. 1 is a block diagram of an example system 100 in which techniques of the present disclosure for handling user requests can be implemented. The example system 100 includes a computing system 102, a client device 104, one or more servers 106, and a network 110. The computing system 102 may be remote from the client device 104 and/or server(s) 106, and is communicatively coupled to the client device 104 and server(s) 106 via the network 110.

The network 110 may be a single communication network (e.g., the Internet), or in some implementations may also include one or more additional networks. As just one example, the network 110 may include a cellular network, the Internet, and a server-side local area network (LAN). While FIG. 1 shows only a single client device 104, it is understood that the computing system 102 may also be in communication with a number (e.g., thousands) of other client devices that are generally similar to the client device 104.

Generally, computing system 102 can perform user request handling services for entities (e.g., as a service/feature within a more comprehensive set of services) and the client device 104 is generally configured to receive and provide information via one or more user interfaces (e.g., web pages and/or user interfaces of mobile applications or other applications) that enable interaction with the computing system 102. For example, the entity associated with computing system 102 may be a provider of digital advertising services and the entity associated with client device 104 may be a particular advertiser that has an account with the provider. In such a case, a user of client device 104 can set up and/or monitor one or more ad campaigns associated with the ad account (e.g., by creating new campaigns, arranging ad groups, creating keywords, monitoring ad performance, setting bid amounts, etc.) via a user interface of a website or application hosted or provided by computing system 102. As discussed further below, the user interface(s) supported by computing system 102 and displayed at client device 104 may include functionality and/or tools, such as an area of the user interface dedicated to chat interactions, that enable the user of client device 104 to enter requests (e.g., queries or instructions) for assistance and view responses generated and sent by computing system 102.

The computing system 102 includes a network interface 120, a processor 122, and memory 124. The network interface 120 includes hardware, firmware, and/or software configured to enable the computing system 102 to exchange electronic data with the client device 104 (and possibly other, similar client devices) and server(s) 106 via the network 110. For example, the network interface 120 may include a wired or wireless router and a modem. The processor 122 may be a single processor (e.g., a central processing unit (CPU)), or may include multiple processors (e.g., multiple CPUs, or one or more CPUs and one or more graphics processing units (GPUs)). Computing system 102 may be a single computing device (e.g., server) at a single location, or may include multiple, coordinating computing devices (e.g., multiple servers) that are either co-located or remotely distributed.

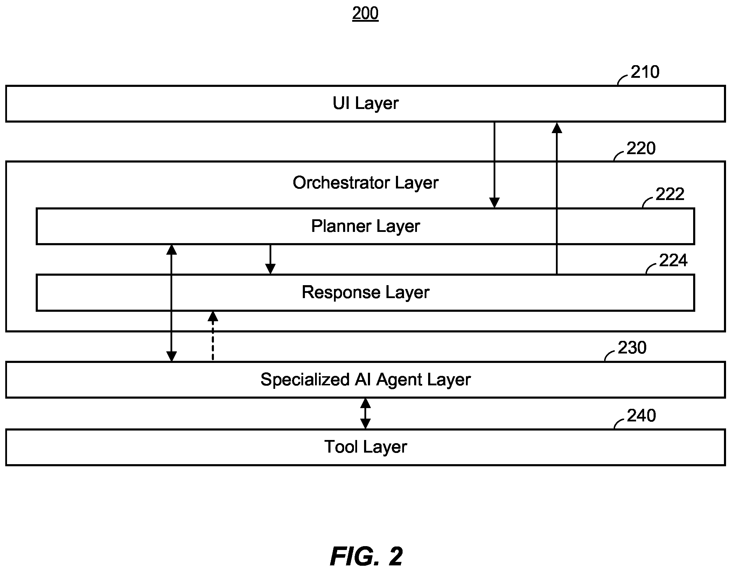

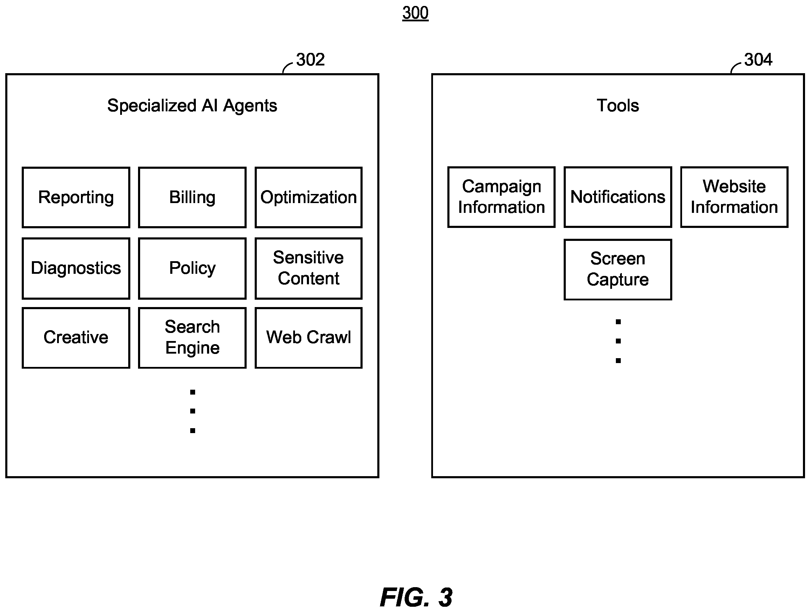

The memory 124 is a computer-readable, non-transitory storage medium, unit, or device, or a collection of such media/units/devices, and may include persistent and/or non-persistent memory components. The memory 124 stores instructions executable by processor 122 to perform various operations, including the instructions of various software applications and the data generated and/or used by such applications. In the example system 100 of FIG. 1, memory 124 stores a user interface (UI) component 130, an orchestrator 132, a number of specialized AI agents 134, models 136, and tools 138. These elements may all reside on a single server of computing system 102 or may be distributed among two or more servers (e.g., servers remote from each other). The operations of these components, according to various implementations and/or scenarios, are discussed in greater detail below with reference to FIGs. 2-8. Generally, however, orchestrator 132 is configured to centrally handle user requests, received from devices such as client device 104, by selectively identifying and using/calling particular AI agents of specialized AI agents 134, which in turn are specifically configured (e.g., trained and/or fine-tuned, and/or associated with different document databases, etc.) to analyze queries in different, respective domains. The tools 138 may include one or more specialized components, modules, models, etc., that can be called upon (e.g., by specialized AI agents 134 and/or directly by planner component 140) as needed to respond to particular requests/queries. Each of the tools 138 may expose a respective application programming interface (API) for accessing that tool, for example. Particular examples of specialized AI agents 134 and tools 138 are discussed below with reference to FIG. 3, for example.

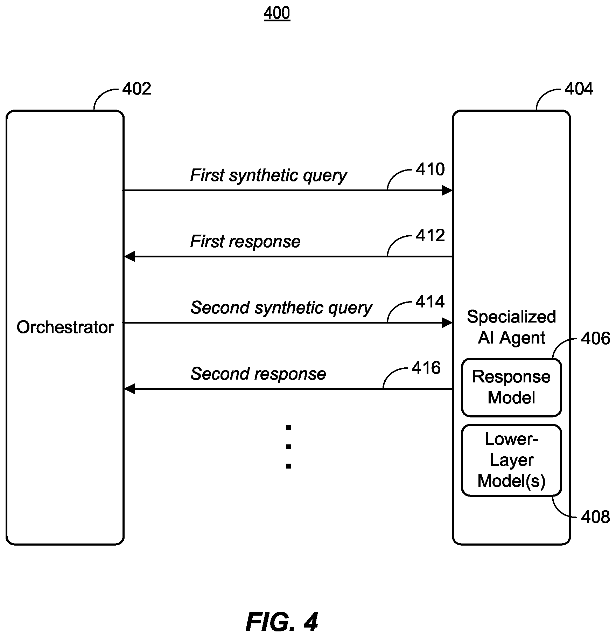

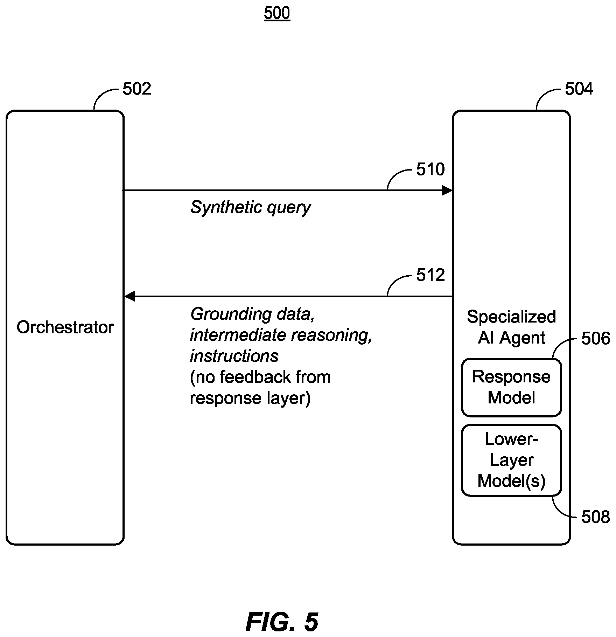

The UI component 130 communicates, via network 110, with client device applications (e.g., with application 170 when executing on client device 104) to populate user interfaces and receive information (including requests) entered by users via those user interfaces. To handle a user request entered via a user interface, the orchestrator 132 includes a planner component 140 and a response component 142, which respectively use a "speculate" and "formulate" approach to respond to the request. The planner component 140 and response component 142 may represent separate models, distinct functions of a single model, or model(s) and associated other components, for example. The planner component 140 generates a response development plan for a given user request, at least in part by determining which of the specialized AI agents 134 is/are relevant to the user request, and then queries the relevant one(s) of the specialized AI agents 134 in accordance with the response development plan. To this end, the planner component 140 may send out synthetic queries to different specialized AI agents 134 in parallel and/or in a serial manner (e.g., by using feedback from a first specialized AI agent to generate a synthetic query for a second specialized AI agent). In some implementations and/or scenarios (e.g., for certain response development plans), the planner component 140 may engage in multi-round conversations with each of one or more of the specialized AI agents 134 (e.g., as discussed below with respect to FIG. 4), and/or one or more of the specialized AI agents 134 may be adapted to provide additional and/or different information to the orchestrator 132 as feedback (e.g., as discussed below with respect to FIG. 5). The response component 142 generates a response to the user based directly or indirectly on feedback from the queried one(s) of the specialized AI agents 134 (e.g., after directly receiving the feedback, or after the planner component 140 or another component or function of orchestrator 132 has summarized, consolidated, filtered, and/or otherwise operated upon that feedback, etc.).

In some implementations, the planner component 140 and/or response component 142 include respective AI agents, and/or the orchestrator 132 includes an AI agent that communicates with the planner component 140 and/or response component 142. For example, a top-level AI agent of the orchestrator 132 may analyze the user request and responsively generate a synthetic query to an AI agent of the planner component 140, where the synthetic query prompts the AI agent of the planner component 140 to formulate a response development plan and generate the appropriate synthetic queries. In addition to (or as a part of) an AI agent, the planner component 140 may include an execution engine that calls/prompts the relevant specialized AI agents 134 using the synthetic queries generated by the planner component 140.

Each of the AI agents of the system 100 (e.g., specialized AI agents 134, an AI agent of the planner component 140, an AI agent of the response component 142, a top-layer AI agent of the orchestrator 132, etc.) may use one or more types of machine learning models included in models 136, such as a large language models (LLM) or a multimodal LLM (MLLM), or possibly, for certain ones of specialized AI agents 134, a classification model such as a neural network, support vector machine, clustering model, regression model, decision tree, etc. Each of some or all of the models 136, and at least some models used by specialized AI agents 134, may be specifically trained (e.g., initially trained and/or fine-tuned) to provide responses in their specific domains (e.g., using supervised learning techniques), and/or may be otherwise configured or arranged to provide responses in their specific domains (e.g., for a retrieval-augmented generation (RAG) based AI agent as discussed below, by having access to a database of documents that are particularly relevant to the specific domain). In some implementations, the planner component 140 includes an AI agent that uses a model (of models 136) trained with supervised learning techniques, with manually created (or manually reviewed) queries/responses being used as ground truths (e.g., with the queries/responses indicating that particular skills/topics/specialized AI agents are relevant to particular user requests, etc.).

In some implementations, one or more of the specialized AI agents 134 can draw upon internal and/or external sources of information when addressing synthetic queries from the planner component 140, using RAG or other suitable techniques. In the example system 100, an account database 180 may store information about the current state of the accounts of advertisers or other entities (e.g., campaign entries/settings such as bid amounts, keywords, etc., and/or creatives/ads associated with campaign(s) of advertisers, etc.), and a knowledge corpus 182 may include other information that may be useful to particular ones of the specialized AI agents 134 (e.g., analytics data, policy guidelines, general business information, etc.). While shown as two separate, local data stores 180 and 182, it is understood that the account database 180 and/or knowledge corpus 182 may be stored locally (e.g., in memory 124), remotely, and/or in a distributed manner. In some implementations, each AI agent of one or more of the specialized AI agents 134 is configured to access only a subset of knowledge corpus 182 (and/or only a subset of account database 180), such that the AI agent can only retrieve (e.g., using RAG) documents that are more likely to be relevant to the domain of that AI agent. This specialization of the available document database can reduce hallucinations and/or increase efficiency by isolating AI agents from at least some information that is likely irrelevant to their domains.

As the terms are used herein, an "AI agent" may in some implementations comprise one or more AI sub-agents (and/or peer AI agents) having a more granular functionality, and a "model" may in some implementations comprise one or more sub-models (and/or peer models). For example, an optimization agent of specialized AI agents 134 may include a first sub-agent that specializes in hypothesizing optimization strategies and a second sub-agent that specializes in collecting campaign and/or other data that is relevant to those optimization strategies.

In some implementations, and as shown in the example system 100 of FIG. 1, the orchestrator 132 maintains configuration data 146 (e.g., stored in memory 124 or memory at one or more remote locations). The configuration data 146 may include data (parameter settings, etc.) that a user (e.g., an administrator using a client device that is a part of computing system 102) enters to configure the orchestrator 132 for particular use cases or particular products/services. For example, the configuration data 146 may indicate that a first subset of the specialized AI agents 134 and/or tools 138 is to be available for selection/use by planner component 140 when a user of a client device (e.g., client device 104) enters a user request in connection with an ad campaign management product, and indicate that a second subset of the specialized AI agents 134 and/or tools 138 (possibly overlapping the first subset) is to be available for selection/use by planner component 140 when a user of a client device instead enters a user request in connection with an ad analytics product.

In some implementations, and as shown in the example system 100 of FIG. 1, the orchestrator 132 maintains user context data 150 and agent context data 152 (e.g., stored in memory 124 or memory at one or more remote locations). The user context data 150 generally provides the planner component 140 (and possibly the response component 142) with information that facilitates generating a response development plan (and thus, an ultimate user response) that is more relevant and/or more appropriate to the context of the user's request. For example, the user context data 150 may include a chat history, over a single session or multiple sessions, of the user who entered the request (e.g., earlier user requests from client device 104 and corresponding responses from response component 142), and/or data associated with a particular entity (e.g., characteristic(s) of an advertiser or other entity associated with the user request, information associated with a business of such an entity, information associated with an account of such an entity, etc.). In some implementations, the user context data 150 can also or instead include information about a current state of a user interface being presented to the user of the client device 104, e.g., as discussed in more detail below. As just one example, if the user context data 150 indicates a chat history in which the user of client device 104 entered text stating the advertiser did not want to increase budget (or the user repeatedly ignored suggestions to increase budget from the response component 142, etc.), then the planner component 140 may generate a synthetic query instructing one of specialized AI agents 134 (e.g., an optimization agent) to avoid recommendations that involve increasing the advertiser's budget. As another example, if the user context data 150 indicates a chat history in which the user of client device 104 entered text expressing frustration with ads being frequently rejected, then the planner component 140 may generate a response development plan that calls a policy agent of the specialized AI agents 134, even if the content of the corresponding user request was such that it would not otherwise have triggered a call to the policy agent.

The agent context data 152 includes data that the orchestrator 132 (e.g., planner component 140) maintains (e.g., creates and updates) for one, some, or all of the specialized AI agents 134. In particular, the agent context data 152 may include histories reflecting previous communications with the specialized AI agent(s) (e.g., synthetic queries and the corresponding responses or other feedback from specialized AI agents), and the planner component 140 may analyze the relevant histories as needed to facilitate formulation of the response development plan. As just one example, if the planner component 140 determines that a policy agent is relevant to a particular user request, and if a context/history maintained by the planner component 140 indicates that the policy agent has frequently and recently returned synthetic query responses indicating that policy guidelines relating to sensitive content are relevant, the planner component 140 may decide to include a call to a sensitive content agent in the response development plan the next time the planner component 140 receives a user request relating to any policy issue. In some implementations, the planner component 140 maintains separate/isolated agent contexts/histories for different ones of some or all of the specialized AI agents 134, and uses a particular AI agent's context when generating a synthetic query for that AI agent but not when generating a synthetic query for any other AI agent. Central maintenance of isolated, agent-specific contexts/histories effectively provides a much broader context window (or equivalently, does not require that specialized AI agents 134 themselves maintain larger contexts), while also reducing the likelihood of hallucination by allowing each of the specialized AI agents 134 to focus more exclusively on its own domain without cross-context pollution (e.g., without the having to analyze/consider unwanted data/history, more pertinent to other specialized AI agents 134, in their synthetic queries).

In some implementations, the orchestrator 132 (e.g., planner component 140) is configured (e.g., trained) to resolve conflicts between different ones of specialized AI agents 134, to avoid inefficiencies and further reduce hallucinations. As just one example, if the planner component 140 identifies a conflict between feedback from two specialized AI agents, the planner component 140 may ignore the feedback (or the relevant part of the feedback) from the AI agent that the planner component 140 determined to be less relevant/important to the response.

The client device 104 may be or include any stationary, mobile, or portable computing device with wired and/or wireless communication capability (e.g., a smartphone, a tablet computer, a laptop computer, a desktop computer, a smart wearable device such as smart glasses or a smart watch, a vehicle head unit computer, etc.). In the example implementation of FIG. 1, client device 104 includes a network interface 160, a processor 162, memory 164, and a display 166. The processor 162 may be a single processor or may include multiple processors. Memory 164 includes one or more computer-readable, non-transitory storage media, units, or devices, which may include persistent and/or non-persistent memory components. Memory 164 stores instructions that are executable by processor 162 to perform various operations, including the instructions of various software applications and the data generated and/or used by such applications.

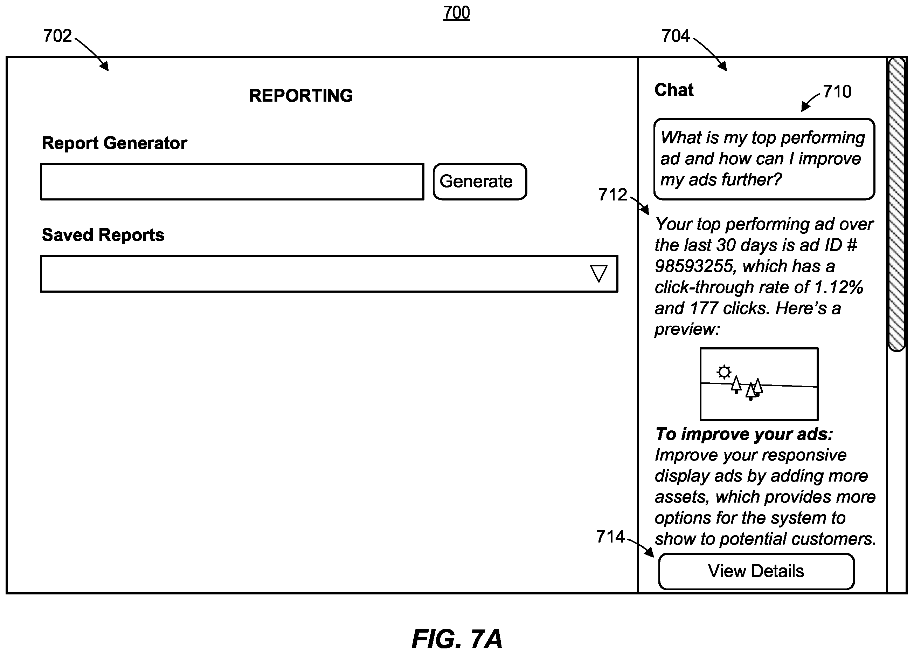

In the example system 100 of FIG. 1, memory 164 stores at least an application 170. For example, application 170 may be a web browser application used to access a website hosted by computing system 102, or a dedicated application (e.g., mobile application) downloaded from computing system 102 or otherwise associated with an entity related to computing system 102, etc. Generally, application 170 is executed by processor 162 to present one or more user interfaces via display 166, where the user interface(s) enable a user to enter user requests to be analyzed by planner component 140, view responses to user requests generated by response component 142, and possibly also facilitate various other tasks or operations (e.g., user changes to campaign settings, user monitoring of campaign performance, etc.). Example user interfaces that may be supported by the UI component 130 (and more generally, by the orchestrator 132) are discussed below in connection with FIGs. 7A-7D.

The display 166 includes hardware, firmware, and/or software configured to enable a user to view visual outputs from the client device 104, and may use any suitable display technology (e.g., LED, OLED, LCD, etc.). In some implementations, the display 166 is incorporated in a touchscreen having both display and manual input capabilities. While not shown in FIG. 1, client device 104 can also include one or more audio output devices or components such as one or more speakers (e.g., for presenting responses to user requests in an audio format).

The network interface 160 includes hardware, firmware, and/or software configured to enable the client device 104 to exchange electronic data with the computing system 102 via the network 110. For example, the network interface 160 may include a cellular communication transceiver, a WiFi transceiver, and/or transceivers for one or more other wired and/or wireless communication technologies.

The server(s) 106 may include any external (e.g., third party) server(s) with which the computing system 102 communicates to obtain data useful in generating responses to user requests. For example, in implementations where the specialized AI agents 134 include an analytics agent, the analytics agent may request relevant analytics data from an analytics server of server(s) 106, or call a tool (of tools 138) that obtains the relevant analytics data from the analytics server, etc. In other implementations, the system 100 omits server(s) 106.

FIG. 2 depicts an example architecture 200 that may be implemented by the computing system 102 of FIG. 1 in order to handle user requests. In FIG. 2, arrows indicate the directionality of communications between layers of the architecture 200.

The example architecture 200 includes a UI layer 210 implemented by the UI component 130, on top of an orchestrator layer 220 implemented by the orchestrator 132. The orchestrator layer 220 includes a planner layer 222 implemented by planner component 140 on top of a response layer 224 implemented by response component 142. Alternatively, planner layer 222 and response layer 224 may reside at a same level in the stack of architecture 200. The orchestrator layer 220 resides on top of a specialized AI agent layer 230 implemented by the specialized AI agents 134, which in turn resides on top of a tool layer 240 implemented by the tools 138. Alternatively, the specialized AI agent layer 230 and the tool layer 240 may reside at a same level in the stack of architecture 200 (or with the specialized AI agent layer 230 partially on top of and partially at the same level as tool layer 240, etc.).

In the example architecture, the UI layer 210 communicates user requests (and possibly other information, such as a screenshot or other current state of the UI) to the planner layer 222, which in turn generates a response development plan and queries relevant one(s) of specialized AI agents 134 in accordance with that plan. As indicated by the leftmost bi-directional arrow in FIG. 2, the specialized AI agent layer 230 (i.e., the relevant one(s) of specialized AI agents 134) may provide feedback (e.g., responses) to the planner layer 222, potentially with multiple loops/rounds of synthetic queries and responses. The planner layer 222 may then provide the feedback (or a synthetic query that the planner component 140 generates based on the feedback) to the response layer 224. Alternatively or additionally (and as shown by the dashed line in FIG. 2), the specialized AI agent layer 230 may provide feedback directly to the response layer 224. Similarly, the specialized AI agent layer 230 may call one or more of the tools 138 by communicating with the tool layer 240, potentially with multiple loops/rounds of tool calls and responses.

After the orchestrator layer 220 (planner layer 222 or response layer 224) has received all responses from the specialized AI agent layer 230 that are expected under the response development plan (possibly excluding any that have timed out due to a non-responsive AI agent, etc.), the orchestrator 132 or planner component 140 may generate a synthetic query communicated to the response layer 224, where the response component 142 then generates a response to the user request and communicates the response to the UI layer 210. The UI layer 210 can then cause the user interface of application 170 at client device 104 to present the response to the user via display 166 (and/or as audio output, etc.).

It is understood that other implementations may support inter-layer communication between more or fewer layers than are shown in FIG. 2, and/or inter-layer communications in more or fewer directions than are shown in FIG. 2. Moreover, in some implementations, the architecture 200 may include one or more additional layers (e.g., a model layer, implemented by models 136, between layers 230 and 240) and/or omit one or more layers (e.g., tool layer 240).

FIG. 3 depicts an example set 300 of specialized AI agents 302 and tools 304 that may be used by the computing system 102 of FIG. 1 and/or within the architecture 200 of FIG. 2. For example, the specialized AI agents 302 and tools 304 may be the specialized AI agents 134 and tools 138, respectively, of FIG. 1.

In the example set 300 of FIG. 3, the specialized AI agents 302 include a reporting agent, a billing agent, an optimization agent, a diagnostics agent, a policy agent, a sensitive content agent, a creative agent, a search engine agent, and a web crawl agent. For example, the depicted specialized AI agents 302 may be specifically configured (trained, fine-tuned, provided access to certain databases for document retrieval, etc.) to perform the following operations:
Reporting Agent: Respond to a synthetic query from planner component 140 by (1) locally planning which data/information to collect (e.g., ad performance/analytics data from knowledge corpus 182), (2) using one or more of tools 304 to collect the desired data/information, (3) using an LLM or MLLM of models 136 to reason based on the collected data/information and the synthetic query, and/or (4) using a response layer model of the reporting agent to formulate a response (e.g., concise presentation of relevant portions, summaries, etc., of the collected information) to the planner component 140, and/or providing other feedback (e.g., grounding data) as discussed below.
Billing Agent: Respond to a synthetic query from planner component 140 by (1) locally planning which data/information to collect (e.g., past budget/cost data from knowledge corpus 182), (2) using one or more of tools 304 to collect the desired data/information, (3) using an LLM or MLLM of models 136 to reason based on the collected data/information and the synthetic query, and/or (4) using a response layer model of the billing agent to formulate a response (e.g., concise and presentation of relevant portions, summaries, etc., of the collected information) to the planner component 140, and/or providing other feedback (e.g., grounding data) as discussed below.
Optimization Agent: Respond to a synthetic query from planner component 140 by (1) locally planning which data/information to collect (e.g., campaign setting information in account database 180, ad performance/analytics data, etc.), (2) using one or more of tools 304 to collect the desired data/information, (3) using an LLM or MLLM of models 136 to reason based on the collected data/information and the synthetic query, and/or (4) using a response layer model of the optimization agent to formulate a response (e.g., proposed way(s) to improve upon past performance as indicated by the collected information) to the planner component 140, and/or providing other feedback (e.g., grounding data) as discussed below.
Diagnostics Agent: Respond to a synthetic query from planner component 140 by (1) locally planning which data/information to collect (e.g., notifications of errors/problems with an account in account database 180), (2) using one or more of tools 304 to collect the desired data/information, (3) using an LLM or MLLM of models 136 to reason based on the collected data/information and the synthetic query, and/or (4) using a response layer model of the diagnostics agent to formulate a response (e.g., proposed way(s) to fix the errors/problems indicated by the collected information) to the planner component 140, and/or providing other feedback (e.g., grounding data) as discussed below.
Policy Agent: Respond to a synthetic query from planner component 140 by (1) locally planning which data/information to collect (e.g., notifications of policy rules from knowledge corpus 182, policy-based rejections of ads in campaign of the advertiser indicated in account database 180 or knowledge corpus 182, etc.), (2) using one or more of tools 304 to collect the desired data/information, (3) using an LLM or MLLM of models 136 to reason based on the collected data/information and the synthetic query, and/or (4) using a response layer model of the policy agent to formulate a response (e.g., a concise explanation of why an ad was disapproved) to the planner component 140, and/or providing other feedback (e.g., grounding data) as discussed below.
Sensitive Content Agent: Respond to a synthetic query from planner component 140 by (1) locally planning which data/information to collect (e.g., notifications of specific policy rules relating to sensitive content from knowledge corpus 182, relevant policy-based rejections of ads in campaign of the advertiser indicated in account database 180 or knowledge corpus 182, etc.), (2) using one or more of tools 304 to collect the desired data/information, (3) using an LLM or MLLM of models 136 to reason based on the collected data/information and the synthetic query, and/or (4) using a response layer model of the sensitive content agent to formulate a response (e.g., a concise explanation of why an ad was disapproved for reasons of sensitive content, or why a question or instruction in a user request raises potential sensitive content issues, etc.) to the planner component 140, and/or providing other feedback (e.g., grounding data) as discussed below. The sensitive content agent may be similar to the policy agent but even more highly specialized, for example.
Creative Agent: Respond to a synthetic query from planner component 140 by (1) locally planning which data/information to collect (e.g., a particular creative of the advertiser in account database 180), (2) using one or more of tools 304 to collect the desired data/information, (3) using an LLM or MLLM of models 136 to reason based on the collected data/information and the synthetic query, and/or (4) using a response layer model of the creative agent to formulate a response (e.g., a concise explanation of why an ad was disapproved) to the planner component 140, and/or providing other feedback (e.g., grounding data) as discussed below.
Search Engine Agent: Respond to a synthetic query from planner component 140 by (1) formulating one or more search queries, (2) running the query or queries on a search engine (e.g., directly or using one of tools 138), (3) using an LLM or MLLM of models 136 to reason based on the search results and the synthetic query, and/or (4) using a response layer model of the search engine agent to formulate a response (or just providing the top N search results directly, etc.) to the planner component 140, and/or providing other feedback (e.g., grounding data) as discussed below.
Web Crawl Agent: Respond to a synthetic query from planner component 140 by (1) formulating web crawl parameters (e.g., a list of URLs to crawl, and/or keywords indicating the types of desired information, etc.), (2) crawling the web based on the web crawl parameters (e.g., directly or using one of tools 138), (3) using an LLM or MLLM of models 136 to reason based on the web crawl results and the synthetic query, and/or (4) using a response layer model of the web crawl agent to formulate a response (or just providing the results from the web crawl directly, etc.) to the planner component 140, and/or providing other feedback (e.g., grounding data) as discussed below.

As noted above, in some implementations and/or scenarios, the planner component 140 may formulate a response development plan in which the planner component 140 queries all of the relevant ones of specialized AI agents 134 in parallel, while in other implementations and/or scenarios the planner component 140 specifies a serial order or some other, more complex ordering (e.g., fanning out parallel synthetic queries to the reporting agent and diagnostics agent, and then querying the optimization agent with an additional synthetic query that is based on responses from the reporting and diagnostics agents, etc.). Moreover, in some implementations and/or scenarios, a first one of the specialized AI agents 134 may call a sub-agent, which may for example be a different, second one of specialized AI agents 134. For example, the diagnostics agent may call the policy agent, and/or the policy agent may call the sensitive content agent, etc.

Also in the example set 300 of FIG. 3, the tools 304 include a campaign information tool, a notifications tool, and a website information tool. For example, the depicted tools 304 may be configured to perform the following operations when called upon (e.g., using respective APIs):
Campaign Information Tool: Retrieve information regarding a particular campaign (e.g., from account database 180), such as campaign entries/settings (keywords, bid amounts, etc.), costs, etc.
Notifications Tool: Retrieve information regarding current notifications associated with a particular account and/or campaign (e.g., from account database 180), such as ad disapproval notices, budgetary notifications, etc.
Website Information Tool: Retrieve information regarding a particular website (e.g., URL or set of URLs), such as by scraping information (product descriptions, etc.) from a landing page associated with a particular ad, etc.
Screen Capture Tool: Retrieve a screenshot of the user interface, and/or other user interface state information, to indicate which screen or screen portion is currently being viewed (e.g., by the user of client device 104).

One or more of the specialized AI agents 302 (e.g., a planning layer/model of an AI agent) may call/use one or more of the tools 304, as appropriate for a particular query. In some implementations, the planner component 140 itself can also, or instead, directly call/use some or all of the tools 304. It is understood that the specialized AI agents 302 may include more, fewer, and/or different AI agents than are shown in FIG. 3, and that the tools 304 may include more, fewer, and/or different tools than are shown in FIG. 3.

FIG. 4 is a messaging diagram representing a sequence 400 of messages that may be exchanged within the computing system 102 of FIG. 1 and/or the architecture 200 of FIG. 2, in one example scenario and implementation. In FIG. 4, the orchestrator 402 may represent the orchestrator 132 or the orchestrator layer 220 and the specialized AI agent 404 may represent one of the specialized AI agents 134 or 302 or the specialized AI agent layer 230, for example.

In the example implementation and scenario of FIG. 4, the orchestrator 402 (e.g., the planner component 140) generates (based on the user request), and sends 410 to the specialized AI agent 404, a first synthetic query. The first synthetic query may be designed to directly elicit a desired final response from the specialized AI agent 404 (e.g., if the response development plan anticipates getting a usable response in as little as one conversation turn/round), or may be designed to gather information useful for generating a next, second synthetic query to the same specialized AI agent 404 (e.g., if the response development plan anticipates a need for multiple conversation turns/rounds). In either case, in the scenario depicted in FIG. 1, the orchestrator 402 (e.g., planner component 140) determines that an additional query is needed after receiving 412 a first response from the specialized AI agent 404, and therefore generates a second synthetic query. The first response may be received 412 by the planner component 140 or the response component 142, depending on the implementation. For example, the planner component 140 may receive the first response and determine that the first response lacks some necessary information, or the response development plan may dictate a follow-up query irrespective of the contents of the first response, etc.

The orchestrator 402 (e.g., planner component 140) therefore generates, and sends 414 to the specialized AI agent 404, a second synthetic query, and receives 416 (e.g., by the planner component 140 or the response component 142) a corresponding, second response from the specialized AI agent 404. Depending on the scenario (or implementation, e.g., if the orchestrator 132 permits a maximum of two turns/rounds of communication with the specialized AI agent 404 to limit latency), the orchestrator 402 may or may not have one or more additional turns/rounds of communications with the specialized AI agent 404. In some implementations, a prompt to the planner component 140 (e.g., generated by a higher-layer AI agent of the orchestrator 132) instructs the planner component 140 to limit the communication to no more than a certain number of turns/rounds, or instructs the planner component 140 to refrain from generating and/or sending another query when the planner component 140 deems the latest response to have a certain level of usefulness, etc.

As seen in FIG. 4, the specialized AI agent 404 may include its own response model 406 and one or more lower-layer models 408. For example, the response model 406 may be a relatively small/weak LLM and the lower-layer model(s) may be one or more larger, more powerful LLMs. The specialized AI agent 404 may use the lower-layer model(s) 408 to perform intermediate reasoning, while using the response model 406 to generate a "final" response based on that reasoning. For example, the lower-layer model(s) 408 may analyze the first synthetic query to generate first intermediate reasoning, and the response model 406 may generate the first response based on the first intermediate reasoning. Similarly, the lower-layer model(s) 408 may analyze the second synthetic query to generate second intermediate reasoning, and the response model 406 may generate the second based on the second intermediate reasoning. The lower-layer model(s) 408 may generate intermediate reasoning based on grounding data that includes information from the synthetic query from the orchestrator 402 and/or other information (e.g., one or more documents retrieved by specialized AI agent 404 using a RAG architecture).

FIG. 5 is a messaging diagram representing another sequence 500 of messages that may be exchanged within the computing system 102 of FIG. 1 and/or the architecture 200 of FIG. 2, in an alternative implementation that may further reduce latency and/or hallucinations. In FIG. 5, the orchestrator 502 may represent the orchestrator 132 or the orchestrator layer 220 and the specialized AI agent 504 may represent one of the specialized AI agents 134 or 302 or the specialized AI agent layer 230, for example. Moreover, the agent-side response model 506 and lower-layer model(s) 508 may be similar to the response model 406 and lower-layer model(s) 408 of FIG. 4.

In the example implementation and scenario of FIG. 5, the orchestrator 502 (e.g., the planner component 140) generates (based on the user request), and sends 510 to the specialized AI agent 504, a first synthetic query. In the implementation of FIG. 5, however, the specialized AI agent 504 is adapted to send 512 to the orchestrator 502 (e.g., to the response component 142) the intermediate reasoning that the lower-layer model(s) 508 generated based on the synthetic query, as well as the grounding data upon which the lower-layer model(s) 508 based the intermediate reasoning. In some implementations, the specialized AI agent 504 also sends 512 instructions regarding how to read/interpret the grounding data, which may be in a format otherwise unknown to the orchestrator 502.

In the implementation shown in FIG. 5, the specialized AI agent 504 does not send any response generated by the response model 506 based on the intermediate reasoning. Thus, higher-layer response formulation is effectively delegated to the orchestrator 502 (e.g., the response component 142), which generates a response based on the intermediate reasoning and grounding data (and possibly instructions on how to read the grounding data), but not based on any response from the response model 506. In some implementations, the specialized AI agent 504 bypasses the response model 506 because no agent-side higher-layer response is needed. In other implementations, the specialized AI agent 504 omits the response model 506 entirely. In still other implementations, the specialized AI agent 504 sends 512 the higher-layer response with the grounding data and intermediate reasoning (and possibly instructions), but the orchestrator 502 (e.g., response component 142) ignores the higher-layer response for purposes of formulating the response to the user request. In any of these implementations, the orchestrator 132 may be provided with enough underlying information to (at least in some cases) prevent any need to re-query the specialized AI agent 504 as shown in FIG. 4. By removing a loop/round (or multiple loops/rounds) in the communication between the orchestrator 502 and specialized AI agent 504, such an implementation can reduce the total latency in the response provided to the user, while also reducing usage of processing power. Moreover, and counter-intuitively (given the greater domain expertise of the specialized AI agent 504), removing (or ignoring, etc.) the layer in which the specialized AI agent 504 formulates its response to the synthetic query from the orchestrator 502 can reduce hallucinations, as conclusions or deductions made by response models of specialized AI agents (e.g., response model 506) can be a significant source of hallucinations.

In some implementations, all of the specialized AI agents 134 or 302 use the technique of FIG. 5 to delegate higher-layer response formulation to the orchestrator 502 (e.g., to the response component 142). In other implementations, only a subset (one or more) of the specialized AI agents 134 or 302 use the technique of FIG. 5, while others use other techniques (e.g., the technique of FIG. 4). Moreover, in some implementations, higher-layer response delegation is decided case by case (e.g., by the planner component 140, which may indicate where delegation is needed in the response development plan and/or in the synthetic queries to specialized AI agents, or by the specialized AI agents themselves).

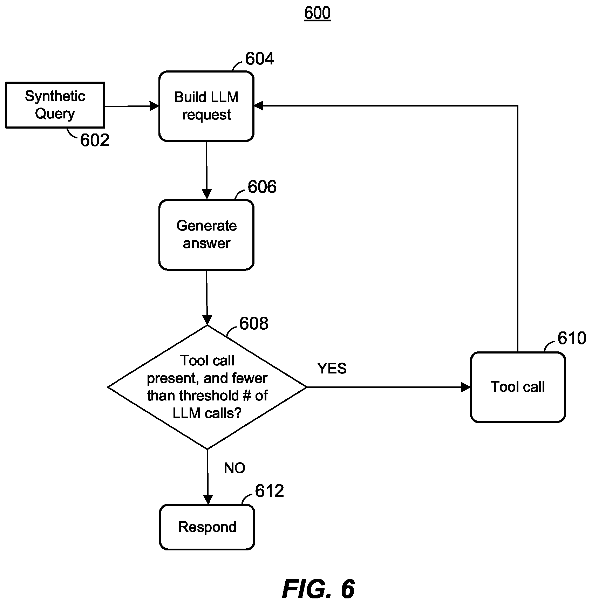

FIG. 6 depicts an example process 600 that may be implemented by each of one or more specialized AI agents (e.g., specialized AI agents 134 or 302). FIG. 6 corresponds to an implementation in which the specialized AI agent uses an LLM (e.g., of models 136) that is specific to that AI agent (i.e., specifically trained and/or otherwise configured to handle queries in a particular domain).

In FIG. 6, a synthetic query 602 (e.g., generated by planner component 140) is received as input by the specialized AI agent, which in response builds an LLM request (e.g., prompt) at stage 604. At stage 606 the specialized AI agent uses the LLM to generate an answer to the LLM request, and at stage 608 the specialized AI agent determines whether a tool call is present in the answer and/or whether there has already been at least a threshold number of LLM calls for the synthetic query 602. If there is a tool call present and the threshold has not yet been reached, flow proceeds to stage 610. At stage 610 the specialized AI agent uses a tool handler to call for the appropriate one of tools 138. If no tool call is present and/or the threshold has been reached, flow proceeds to stage 612, at which case the specialized AI agent responds to the synthetic query using the information provided by the tool(s). For example, stage 612 may include sending a higher-layer response as in FIG. 4, or sending underlying grounding data and intermediate reasoning as in FIG. 5.

FIGs. 7A-7D depict user various interfaces that the UI component 130 of FIG. 1 may cause to be presented to a user (e.g., to a user of client device 104 via application 177 and display 166), in various example scenarios and implementations.

Referring first to FIG. 7A, a user interface 700 includes a working area 702 and a chat area 704. The working area 702 may support a service or feature of a digital advertising platform provider, while chat area 704 enables the user to enter requests and view responses from the orchestrator 132. In particular, the chat area 704 includes a user request field 710 in which the user may enter his or her request, and a response area 712 that shows the response. In some implementations, the chat area 704 also provides further user request fields to allow the user to continue the conversation with the orchestrator 132.

In the example of FIG. 7A the user asks, "What is my top performing ad and how can I improve my ads further?", and the orchestrator 132 responds (at least in part) as shown. In particular, the response shows an identifier of the advertiser's top-performing ad, and performance metrics (click-through rate and number of clicks) for that ad. The response of this example also provides at least one suggestion for improving the advertiser's ad campaign, with an interactive control 714 that, if activated by the user, causes additional detail to be presented (e.g., by activating a deep link to a screen/page of a product or service associated with the working area 702).

As an example, with reference to FIGs. 1 and 3, the response in response area 712 may be generated as follows: 1) based on the user request in field 710, the planner component 140 generates a response development plan specifying that the reporting agent and the optimization agent are to be called in parallel; 2) the planner component 140 generates and sends respective synthetic queries for the reporting agent and optimization agent; 3) the reporting agent, based on its query, calls the campaign information tool to obtain the performance metrics for all ads of the advertiser; 4) based on the performance metrics, the reporting agent identifies the best-performing ad and provides feedback including at least the ad identifier and corresponding performance metrics to the orchestrator 132; 5) in parallel with the reporting agent operations, and based on its own query, the optimization agent calls the campaign information tool to obtain campaign settings and performance metrics for the advertiser; 6) based on the campaign settings and performance metrics, the optimization agent formulates one or more optimization strategies and provides feedback indicating the optimization strategies to the orchestrator 132; and 7) the response component 142 formulates the text shown in response area 712 based on the feedback from the policy agent and optimization agent. In some implementations, the reporting agent and/or optimization agent provide grounding data and intermediate reasoning as described above in connection with FIG. 5.

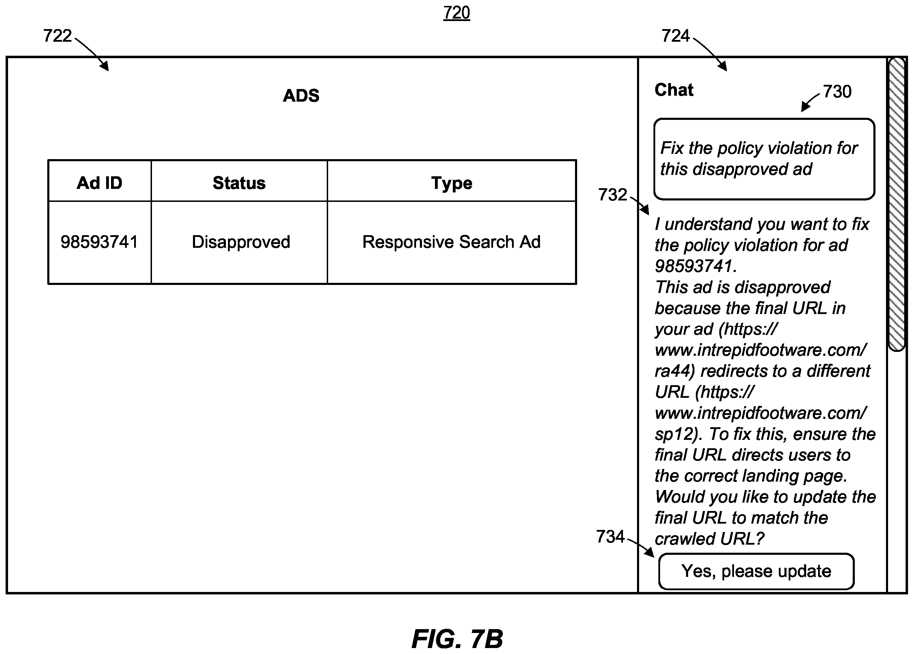

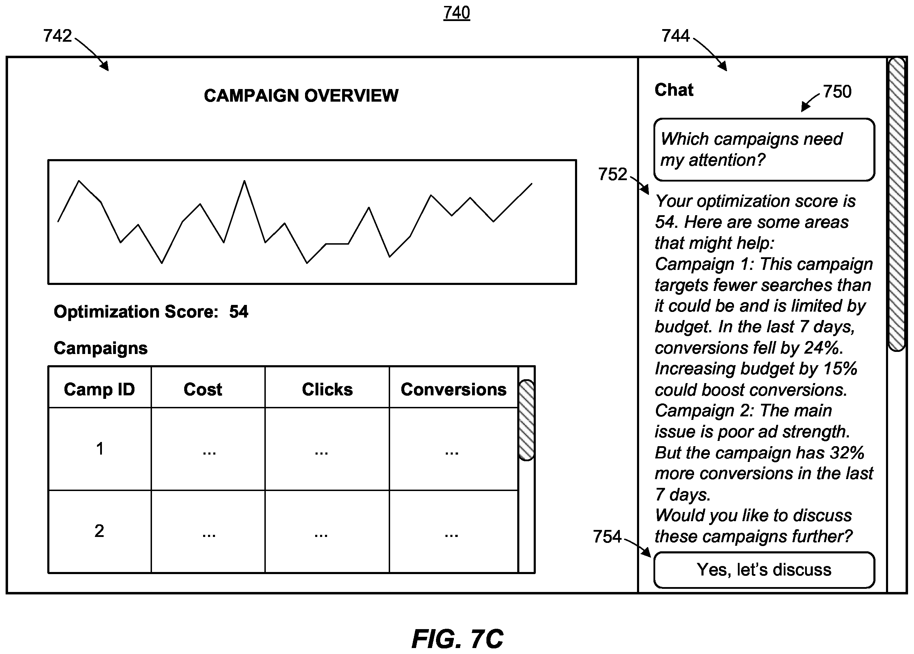

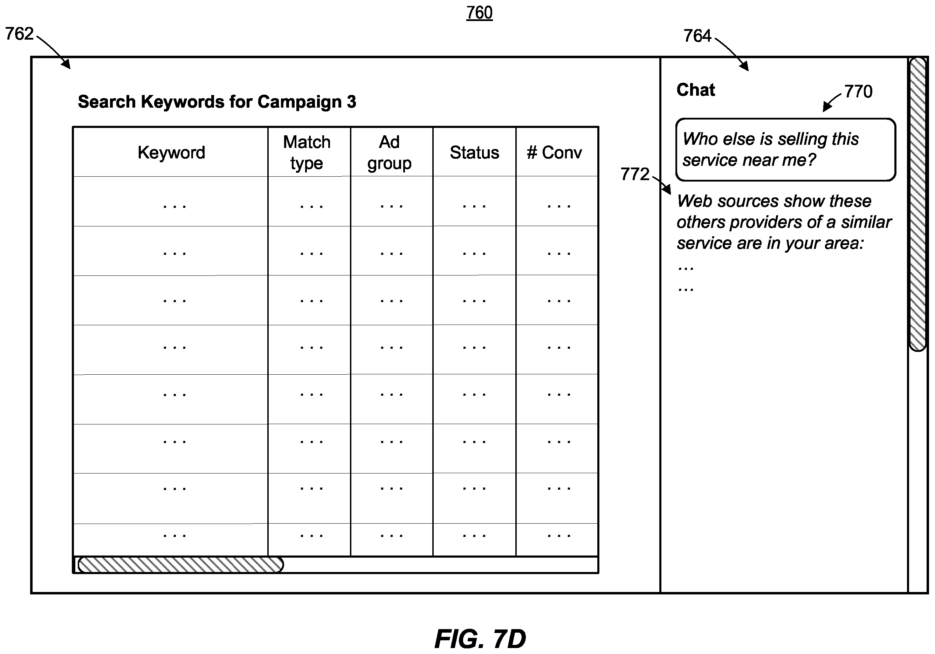

Referring next to FIG. 7B, a user interface 720 includes a working area 722 and a chat area 724. The working area 722 may support a service or feature of the digital advertising platform provider, while chat area 724 enables the user to enter requests and view responses from the orchestrator 132. For example, the chat area 704 of FIG. 7A and chat area 724 (and/or the chat areas of FIGs. 7C and/or 7D) may be one and the same, i.e., a persistent chat area that remains in place as the user navigates to different screens. The chat area 724 includes a user request field 730 in which the user may enter his or her request, and a response area 732 that shows the response.

In the example of FIG. 7B the user instructs, "Fix the policy violation for this disapproved ad", and the orchestrator 132 responds (at least in part) as shown. In particular, the response shows a specific reason why the ad shown in working area 722 was disapproved. The response of this example also provides an interactive control 734 that, if activated by the user, causes the system to make the ad meet policy guidelines, or at least attempt to make the ad meet policy guidelines.

As an example, with reference to FIGs. 1 and 3, the response in response area 732 may be generated as follows: 1) based on the user request in field 730, the planner component 140 generates a response development plan specifying that the policy agent is to be called; 2) the policy agent, or the planner component 140, calls the screen capture tool to obtain a screen shot of the user interface as seen by the user of client device 104; 3) the planner component 140 generates and sends a synthetic query for the policy agent; 4) the policy agent, based on its query and the screen shot (or information that the planner component 140 derived from the screen shot), calls the notifications tool to obtain the reason why the ad currently shown in working area 722 was disapproved; 5) based on the reason for disapproval, the policy agent generates a description of the reason for disapproval and identifies a remedial action for addressing that reason; and 6) the response component 142 formulates the text shown in response area 732 based on the feedback from the policy agent. User activation of the user interactive control 734 may cause the orchestrator 132 (or a specialized AI agent 134 or tool 138, etc.) to communicate with another system or platform (e.g., via an API), which in turn effectuates the specific change described in response area 732 (possibly after the user provides further confirmation). In some implementations, the policy agent provides grounding data and intermediate reasoning as described above in connection with FIG. 5.

Referring next to FIG. 7C, a user interface 740 includes a working area 742 and a chat area 744. The working area 742 may support a service or feature of the digital advertising platform provider, while chat area 744 enables the user to enter requests and view responses from the orchestrator 132. The chat area 744 includes a user request field 750 in which the user may enter his or her request, and a response area 752 that shows the response.

In the example of FIG. 7C the user asks, "Which campaigns need my attention?", and the orchestrator 132 responds (at least in part) as shown. In particular, the response shows specific reasons why particular campaigns of the advertiser could use improvement, along with possible ways to effectuate at least some of those improvements. The response of this example also provides an interactive control 754 that, if activated by the user, causes the system to make the ad meet policy guidelines, or at least attempt to make the ad meet policy guidelines.

As an example, with reference to FIGs. 1 and 3, the response in response area 752 may be generated as follows: 1) based on the user request in field 750, the planner component 140 generates a response development plan specifying that the reporting agent and the optimization agent are to be called sequentially; 2) the planner component 140 generates and sends a synthetic query to the reporting agent; 3) the reporting agent, based on its query, calls the campaign information tool to obtain performance metrics for all campaigns of the advertiser (and/or for specific ads therein); 4) based on the performance metrics, the reporting agent generates a description of relatively poor-performing campaigns of the advertiser; 5) based on the description from the reporting agent, the planner component 140 generates and sends to the optimization agent a synthetic query; 6) the optimization agent, based on its query, identifies potential improvements for one or more of the poor-performing campaigns; and 7) the response component 142 formulates the text shown in response area 752 based on the feedback from the reporting agent and optimization agent. User activation of the user interactive control 754 may cause the planner component 140 to generate another synthetic query to optimization agent to obtain a more detailed optimization plan, for example. Alternatively, user activation of the user interactive control 754 may activate a deep link to a screen/page of a product or service associated with the working area 742. In some implementations, the reporting agent and/or optimization agent provide grounding data and intermediate reasoning as described above in connection with FIG. 5.

Referring next to FIG. 7D, a user interface 760 includes a working area 762 and a chat area 764. The working area 762 may support another service or feature of the digital advertising platform provider, while chat area 764 enables the user to enter requests and view responses from the orchestrator 132. The chat area 764 includes a user request field 770 in which the user may enter his or her request, and a response area 772 that shows the response.

In the example of FIG. 7D the user asks, "Who else is selling this service near me?", and the orchestrator 132 responds (at least in part) as shown. In particular, the response lists other businesses that, according to one or more web sources, are geographically close to site of the advertiser.

As an example, with reference to FIGs. 1 and 3, the response in response area 772 may be generated as follows: 1) based on the user request in field 770, the planner component 140 generates a response development plan specifying that the campaign information tool (or another suitable tool) is to be called, after which the search engine agent is to be called; 2) the planner component 140 uses the campaign information tool (or other suitable tool) to obtain a physical address or other location of the advertiser; 3) the planner component 140 generates and sends a synthetic query, including the location, to the search engine agent; 4) the search engine agent, based on its query, calls an API of a search engine (e.g., via a tool 138 or 304) using another query that indicates the location, and receives search results; 5) the search engine agent provides feedback indicating at least a subset of the relevant search results; and 6) the response component 142 formulates the text shown in response area 772 based on the feedback from the search engine agent. In some implementations, the search engine agent provides grounding data and intermediate reasoning as described above in connection with FIG. 5.

As noted above, in some implementations, the orchestrator 132 (e.g., planner component 140) maintains one or more contexts, e.g., as reflected by user context data 150 and/or agent context data 152 of FIG. 1. As an example of user context data (beyond the screen shot example of FIG. 7B), in the scenario and implementation of FIG. 7A, the planner component 140 may generate the response development plan based not only on the user request in field 710, but also based on a chat history indicating that the user previously was interested in the last 30 days of performance (e.g., causing the planner component 140 to generate a synthetic query to the reporting agent that specifically asks for the last 30 days of performance for the top performing ad). As an example of agent context data, in the scenario and implementation of FIG. 7B, the planner component 140 may generate the response development plan based not only on the user request in field 730, but also based on a history of queries/responses between planner component 140 and policy agent indicating the particular ad that the user is likely referring to (e.g., in an implementation where UI context/screen capture techniques are not used).

As also noted above, in some implementations, the response component 142 responds to the initial user request, at least in part, by performing or triggering an action. For example, in the scenario and implementation of FIG. 7B, the response component 142 may cause the response area 752 to include an interactive control. User activation of the interactive control may then cause the computing system 102 (or another device/system) to assume remote control of an input function of the client device 104, and thereby automatically select various controls, enter information in various fields, etc., of working area 742.

In some implementations, orchestrator 132 outputs text indicative of its reasoning stages according to the response development plan, which computing system 102 may then send to client device 104 for real-time presentation to the user via application 170 and display 166. In this manner, the steps of the plan may be more transparent to the user, and the user may find it easier to remain engaged with the process during delays due to processing latency. With reference to FIG. 7A, for example, the user may initially be presented with the text "Collecting performance metrics for all your ads" after entering the query in user request field 710 (while the reporting agent calls the campaign information tool), after which that text may be replaced with the text "Looking for your best-performing ad" (while the reporting agent identifies the best-performing ad), and so on.

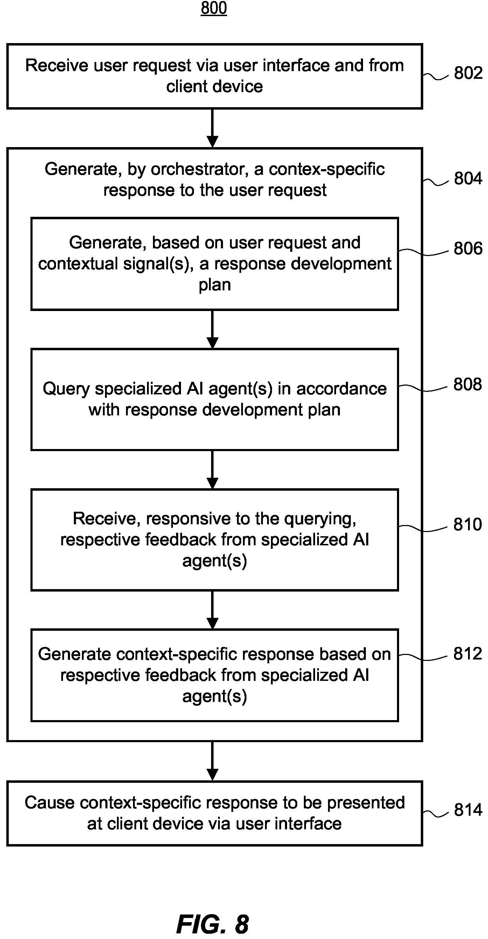

FIG. 8 is a flow diagram of an example method 800 for accurate and low-latency user request handling. The method 800 may be implemented by the computing system 102 of FIG. 1 (e.g., orchestrator 132, as executed by processor 122, and possibly specialized AI agents 134 and/or other components), for example.

At block 802, a user request is received (e.g., by planner component 140) via a user interface and from a client device (e.g., client device 104). At block 804, the orchestrator (e.g., orchestrator 132) generates a context-specific response to the user request. Block 804 includes blocks 806, 808, 810, and 812.

At block 806, the orchestrator (e.g., planner component 140 of orchestrator 132) generates a response development plan based on the user request and one or more contextual signals (e.g., from user context data 150 and/or agent context data 152). The response development plan specifies one or more specialized AI agents of a plurality of specialized AI agents (e.g., specialized AI agents 134 or 302), at least in part by determining that the one or more specialized AI agents are relevant to the user request. Each of the specialized AI agents is configured to analyze queries specific to a respective domain.

At block 808, the orchestrator queries the one or more specialized AI agents in accordance with the response development plan. At block 810, respective feedback is received from the one or more specialized AI agents in response to the querying. The feedback may be a higher-layer response (e.g., similar to FIG. 4) or may include intermediate reasoning and grounding data (e.g., similar to FIG. 5).

At block 812, the orchestrator (e.g., response component 142 of orchestrator 132) generates a context-specific response based on the respective feedback received at block 810.

At block 814, the context-specific response is caused to be presented at the client device via the user interface.

In other implementations, the method 800 may include more or fewer blocks, and/or certain blocks may occur in an order other than what is shown in FIG. 8. For example, block 812 may include identifying an action to take in response to the user request, and the method 800 may include an additional block in which the action is caused to occur (e.g., causing one or more operations to occur via the user interface by remotely assuming control of the user interface at the client device).

As is apparent from the above description, some of the techniques disclosed herein use artificial intelligence to generate high quality videos for particular products and audiences. Artificial intelligence (AI) is a segment of computer science that focuses on the creation of models that can perform tasks with little to no human intervention. Artificial intelligence systems can utilize, for example, machine learning, natural language processing, and computer vision. Machine learning, and its subsets, such as deep learning, focus on developing models that can infer outputs from data. The outputs can include, for example, predictions and/or classifications. Natural language processing focuses on analyzing and generating human language. Computer vision focuses on analyzing and interpreting images and videos. Artificial intelligence systems can include generative models that generate new content, such as images, videos, text, audio, and/or other content, in response to input prompts and/or based on other information.

Example machine-learned models include neural networks or other multi-layer nonlinear models. Example neural networks include feed forward neural networks, deep neural networks, recurrent neural networks, and convolutional neural networks. Some example machine-learned models can leverage an attention mechanism such as self-attention. For example, some machine-learned models can include multi-headed self-attention models (e.g., transformer models).

The model(s) can be trained using various training or learning techniques. The training can implement supervised learning, unsupervised learning, reinforcement learning, etc. The training can use techniques such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations. A number of generalization techniques (e.g., weight decays, dropouts) can be used to improve the generalization capability of the models being trained.

The model(s) can be pre-trained before domain-specific alignment. For instance, a model can be pretrained over a general corpus of training data and finetuned on a more targeted corpus of training data. A model can be aligned using prompts that are designed to elicit domain-specific outputs. Prompts can be designed to include learned prompt values (e.g., soft prompts). The trained model(s) may be validated prior to their use using input data other than the training data, and may be further updated or refined during their use based on additional feedback/inputs.

In some implementations, the computing system 102 may use one or more of the machine learning models or techniques noted above to perform any one or more of the operations discussed herein in connection with machine learning. For example, any of the models 136 may use one or more such machine learning techniques to help formulate responses (and/or intermediate reasoning, etc.).

The following list of examples reflects a variety of the implementations explicitly contemplated by the present disclosure:
Example 1. A computer-implemented method for accurate and low-latency user request handling, the computer-implemented method comprising: receiving a user request via a user interface and from a client device; generating, by an orchestrator that is communicatively coupled to a plurality of specialized artificial intelligence (AI) agents, a context-specific response to the user request at least in part by: generating, based on (i) the user request and (ii) one or more contextual signals, a response development plan specifying one or more specialized AI agents of the plurality of specialized AI agents, wherein generating the response development plan includes determining that the one or more specialized AI agents are relevant to the user request, and wherein each of the plurality of specialized AI agents is configured to analyze queries specific to a respective domain; querying the one or more specialized AI agents in accordance with the response development plan; receiving, responsive to the querying, respective feedback from the one or more specialized AI agents; and generating the context-specific response based on the respective feedback from the one or more specialized AI agents; and causing the context-specific response to be presented at the client device via the user interface.
Example 2. The computer-implemented method of example 1, wherein: the one or more specialized AI agents include a first specialized AI agent and a second specialized AI agent; the computer-implemented method further comprises maintaining, by the orchestrator, (i) a first agent context based on past communication between the orchestrator and the first specialized AI agent and (ii) a second agent context based on past communication between the orchestrator and the second specialized AI agent, the orchestrator maintaining the first agent context in isolation from the second agent context; and querying the one or more specialized AI agents includes (i) generating a first synthetic query for the first specialized AI agent based in part on the first agent context and (ii) generating a second synthetic query for the second specialized AI agent based in part on the second agent context.
Example 3. The computer-implemented method of example 1 or 2, wherein: querying the one or more specialized AI agents includes sending a first synthetic query to a first specialized AI agent; receiving the respective feedback includes receiving, from the first specialized AI agent, (i) intermediate reasoning that supports a response to the first synthetic query and (ii) grounding data that the first specialized AI agent uses to generate the intermediate reasoning; and generating the context-specific response includes generating the context-specific response based on the grounding data and the intermediate reasoning.
Example 4. The computer-implemented method of example 3, wherein: the first specialized AI agent includes a first AI agent response model configured to generate responses to synthetic queries based on intermediate reasonings; and generating the context-specific response includes not using any response generated by the first AI agent response model to generate the context-specific response.
Example 5. The computer-implemented method of example 3 or 4, wherein: receiving the respective feedback includes receiving, from the first specialized AI agent, instructions regarding how to read the grounding data.
Example 6. The computer-implemented method of any one of examples 1-5, wherein generating the response development plan and generating the context-specific response are performed by a single generative AI model.
Example 7. The computer-implemented method of any one of examples 1-5, wherein: the orchestrator comprises a planner model that generates the response development plan and a response model that generates the context-specific response; the planner model comprises a first AI agent; and the response model comprises a second AI agent.
Example 8. The computer-implemented method of example 7, wherein: the orchestrator comprises a third AI agent that receives the user request, generates a prompt based on the user request, and applies the prompt to the first AI agent to cause the first AI agent to generate the response development plan.
Example 9. The computer-implemented method of any one of examples 1-8, wherein the one or more contextual signals include one or more of: one or more characteristics of an entity; information associated with a business of the entity; or information associated with an account of the entity.
Example 10. The computer-implemented method of any one of examples 1-9, wherein the one or more contextual signals include data indicative of a state of the user interface.
Example 11. The computer-implemented method of any one of examples 1-10, wherein: generating the context-specific response includes identifying an action to take in response to the user request; and the computer-implemented method further comprises causing the action to occur.
Example 12. The computer-implemented method of example 11, wherein: identifying the action includes determining a set of one or more desired operations via the user interface; and causing the action to occur includes causing the client device to perform the set of one or more desired operations via the user interface by remotely assuming control of an input function of the client device.
Example 13. The computer-implemented method of any one of examples 1-10, wherein: the one or more specialized AI agents include a first specialized AI agent and a second specialized AI agent; and generating the context-specific response includes resolving a conflict between (i) first feedback provided by the first specialized AI agent responsive to the querying and (ii) second feedback provided by the second specialized AI agent responsive to the querying.
Example 14. The computer-implemented method of any one of examples 1-13, wherein the response development plan further specifies an order according to which the planner model is to query the one or more specialized AI agents.
Example 15. The computer-implemented method of example 14, wherein the order indicates that the planner model is to query at least two specialized AI agents in parallel.
Example 16. The computer-implemented method of example 15, wherein the order indicates that the planner model is to use the respective feedback from a first specialized AI agent to generate a synthetic query for querying a second specialized AI agent.
Example 17. The computer-implemented method of any one of examples 1-16, further comprising: maintaining, by the planner model, historical data based on past interactions associated with (i) a user of the client device or (ii) an entity associated with the user or the client device, wherein one or both of (i) generating the response development plan, and (ii) querying the one or more specialized AI agents, are based in part on the historical data.
Example 18. The computer-implemented method of example 17, wherein the historical data includes a chat history at least partially displayed on the user interface.
Example 19. The computer-implemented method of any one of examples 1-18, further comprising: generating, by the one or more specialized AI agents, the respective feedback.
Example 20. The computer-implemented method of example 19, wherein generating the respective feedback includes: querying, by a first specialized AI agent of the one or more specialized AI agents, another AI agent.
Example 21. The computer-implemented method of example 19, wherein generating the respective feedback includes: calling, by a first specialized AI agent of the one or more specialized AI agents and via an application programming interface (API), a tool configured to provide one or more types of information.
Example 22. The computer-implemented method of any one of examples 1-21, wherein the one or more specialized AI agents include one or both of (i) a web crawler agent and (ii) a search engine agent.
Example 23. The computer-implemented method of any one of examples 1-22, wherein the one or more specialized AI agents include one or more of: a reporting agent; an optimization agent; a billing agent; a policy agent; or a diagnostics agent.
Example 24. A system comprising: one or more processors; and one or more memories storing instructions that, when executed by the one or more processors, cause the one or more processors to perform the computer-implemented method of any one of examples 1-23.
Example 24. One or more non-transitory, computer-readable media storing instructions that, when executed by one or more processors, cause the one or more processors to perform the computer-implemented method of any one of examples 1-23.

Although the foregoing text sets forth a detailed description of numerous different aspects and implementations of the invention, it should be understood that the scope of the patent is defined by the words of the claims set forth at the end of this patent. The detailed description is to be construed as exemplary only and does not describe every possible implementation because describing every possible implementation would be impractical, if not impossible. Numerous alternative implementations could be implemented, using either current technology or technology developed after the filing date of this patent, which would still fall within the scope of the claims.

The following additional considerations apply to the foregoing discussion and the appended claims. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter of the present disclosure.

Unless otherwise apparent from the context of use, reference in the present disclosure to a same set of "one or more processors" (or a same "plurality of processors," etc.) performing multiple operations can encompass implementations in which performance of the operations is divided among the processor(s) in any suitable way. For example, "generating, by one or more processors, X; and generating, by the one or more processors, Y" can encompass: (1) implementations in which a first set of one or more processors (e.g., in a first computing device) generates X and a distinct, second set of one or more processors (e.g., in a different, second computing device) independently generates Y; (2) implementations in which all processors in the set of one or more processors (e.g., all in the same device, or distributed among multiple devices) contribute to the generation of both X and Y; and (3) other variations.

Unless specifically stated otherwise, discussions in the present disclosure using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used in the present disclosure any reference to "one implementation" or "an implementation" means that a particular element, feature, structure, or characteristic described in connection with the implementation is included in at least one implementation or implementation. The appearances of the phrase "in one implementation" in various places in the specification are not necessarily all referring to the same implementation.

As used in the present disclosure, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Upon reading this disclosure, those of skill in the art will appreciate still additional alternative structural and functional designs through the principles described herein. Thus, while particular implementations and applications have been illustrated and described, it is to be understood that the disclosed implementations are not limited to the precise construction and components disclosed in the present disclosure. Various modifications, changes and variations, which will be apparent to those skilled in the art, may be made in the arrangement, operation and details of the method and apparatus disclosed in the present disclosure without departing from the spirit and scope defined in the appended claims.

## Claims

1. A computer-implemented method for accurate and low-latency user request handling, the computer-implemented method comprising:
receiving a user request via a user interface and from a client device;
generating, by an orchestrator that is communicatively coupled to a plurality of specialized artificial intelligence (AI) agents, a context-specific response to the user request at least in part by:
generating, based on (i) the user request and (ii) one or more contextual signals, a response development plan specifying one or more specialized AI agents of the plurality of specialized AI agents, wherein generating the response development plan includes determining that the one or more specialized AI agents are relevant to the user request, and wherein each of the plurality of specialized AI agents is configured to analyze queries specific to a respective domain;
querying the one or more specialized AI agents in accordance with the response development plan;
receiving, responsive to the querying, respective feedback from the one or more specialized AI agents; and
generating the context-specific response based on the respective feedback from the one or more specialized AI agents; and
causing the context-specific response to be presented at the client device via the user interface.

2. The computer-implemented method of claim 1, wherein:
the one or more specialized AI agents include a first specialized AI agent and a second specialized AI agent;
the computer-implemented method further comprises maintaining, by the orchestrator, (i) a first agent context based on past communication between the orchestrator and the first specialized AI agent and (ii) a second agent context based on past communication between the orchestrator and the second specialized AI agent, the orchestrator maintaining the first agent context in isolation from the second agent context; and
querying the one or more specialized AI agents includes (i) generating a first synthetic query for the first specialized AI agent based in part on the first agent context and (ii) generating a second synthetic query for the second specialized AI agent based in part on the second agent context.

3. The computer-implemented method of claim 1 or 2, wherein:
querying the one or more specialized AI agents includes sending a first synthetic query to a first specialized AI agent;
receiving the respective feedback includes receiving, from the first specialized AI agent, (i) intermediate reasoning that supports a response to the first synthetic query and (ii) grounding data that the first specialized AI agent uses to generate the intermediate reasoning; and
generating the context-specific response includes generating the context-specific response based on the grounding data and the intermediate reasoning.

4. The computer-implemented method of claim 3, wherein:
the first specialized AI agent includes a first AI agent response model configured to generate responses to synthetic queries based on intermediate reasonings; and
generating the context-specific response includes not using any response generated by the first AI agent response model to generate the context-specific response.

5. The computer-implemented method of claim 3 or 4, wherein:
receiving the respective feedback includes receiving, from the first specialized AI agent, instructions regarding how to read the grounding data.

6. The computer-implemented method of any preceding claim, wherein generating the response development plan and generating the context-specific response are performed by a single generative AI model.

7. The computer-implemented method of any preceding claim, wherein the one or more contextual signals include one or more of:
one or more characteristics of an entity;
information associated with a business of the entity; or
information associated with an account of the entity.

8. The computer-implemented method of any preceding claim, wherein the one or more contextual signals include data indicative of a state of the user interface.

9. The computer-implemented method of any preceding claim, wherein:
generating the context-specific response includes identifying an action to take in response to the user request; and
the computer-implemented method further comprises causing the action to occur, wherein optionally:
identifying the action includes determining a set of one or more desired operations via the user interface; and
causing the action to occur includes causing the client device to perform the set of one or more desired operations via the user interface by remotely assuming control of an input function of the client device.

10. The computer-implemented method of any preceding claim, wherein:
the one or more specialized AI agents include a first specialized AI agent and a second specialized AI agent; and
generating the context-specific response includes resolving a conflict between (i) first feedback provided by the first specialized AI agent responsive to the querying and (ii) second feedback provided by the second specialized AI agent responsive to the querying.

11. The computer-implemented method of any preceding claim, wherein the response development plan further specifies an order according to which the orchestrator is to query the one or more specialized AI agents, wherein the order optionally indicates that the orchestrator is to use the respective feedback from a first specialized AI agent to generate a synthetic query for querying a second specialized AI agent.

12. The computer-implemented method of any preceding claim, further comprising:
maintaining, by the orchestrator, historical data based on past interactions associated with (i) a user of the client device or (ii) an entity associated with the user or the client device,
wherein one or both of (i) generating the response development plan, and (ii) querying the one or more specialized AI agents, are based in part on the historical data, wherein the historical data optionally includes a chat history at least partially displayed on the user interface.

13. The computer-implemented method of any preceding claim, wherein the one or more specialized AI agents include one or both of (i) a web crawler agent and (ii) a search engine agent.

14. The computer-implemented method of any preceding claim, wherein the one or more specialized AI agents include one or more of:
a reporting agent;
an optimization agent;
a billing agent;
a policy agent; or
a diagnostics agent.

15. A system comprising:
one or more processors; and
one or more memories storing instructions that, when executed by the one or more processors, cause the one or more processors to perform operations comprising a method according to any preceding claim.
